(19) **Europäisches Patentamt**

**European Patent Office**

**Office européen des brevets**

(11) **EP 1 601 148 A2**

(12) **EUROPÄISCHE PATENTANMELDUNG**

(43) Veröffentlichungstag:
 **30.11.2005 Patentblatt 2005/48**

(51) Int Cl.7: **H04L 25/06**

(21) Anmeldenummer: **05006235.5**

(22) Anmeldetag: **22.03.2005**

(84) Benannte Vertragsstaaten:
 **AT BE BG CH CY CZ DE DK EE ES FI FR GB GR HU IE IS IT LI LT LU MC NL PL PT RO SE SI SK TR**
 Benannte Erstreckungsstaaten:
 **AL BA HR LV MK YU**

(30) Priorität: **24.05.2004 DE 102004025826**

(71) Anmelder: **Micronas GmbH**
 **79108 Freiburg (DE)**

(72) Erfinder:
 • **Keller, Stefan, Dipl.-Ing.**
  **79106 Freiburg (DE)**
 • **Oome, Ramon**
  **6537 LG Nijmegen (NL)**

(74) Vertreter: **Mussgnug, Bernd et al**
 **Patentanwälte**
 **Westphal, Mussgnug & Partner**
 **Am Riettor 5**
 **78048 Villingen-Schwenningen (DE)**

Bemerkungen:
 Ein Antrag gemäss Regel 88 EPÜ auf Berichtigung der mathematischen Formel auf der Seite 2 liegt vor. Über diesen Antrag wird im Laufe des Verfahrens vor der Prüfungsabteilung eine Entscheidung getroffen werden (Richtlinien für die Prüfung im EPA, A-V, 3.).

(54) **Verfahren und Rückbildung einer Bitsequenz aus QPSK-oder QAM-Symbolen**

(57) Die Erfindung betrifft ein verfahren zur Rückbildung einer Bitsequenz (b, b') aus QPSK- oder QAM-Symbolen, bei dem jedem Empfangsbit (b, b') eine zugehörige Empfangswahrscheinlichkeit (w, w') zugeordnet wird. Erfindungsgemäß ist vorgesehen, dass die Empfangswahrscheinlichkeit (w, w') unter Berücksichtigung der Übertragungseigenschaften des Kanals adaptiv bestimmt wird. Die Erfindung betrifft weiter eine entsprechende Schaltungsanordnung (1).

FIG 12

**Beschreibung**

Die Erfindung betrifft ein Verfahren zur Rückbildung einer Bitsequenz aus QPSK oder QAM-Symbolen nach dem Oberbegriff der Patentansprüche 1, 7, 8 und 9 sowie eine Schaltungsanordnung zur Rückbildung einer Bitsequenz aus QPSK oder QAM-Symbolen nach dem Oberbegriff der Patentansprüche 10, 11 und 12.

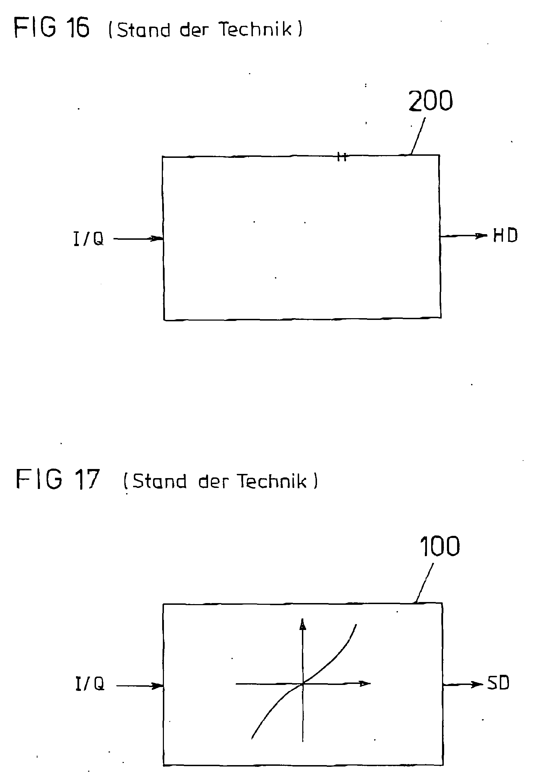

Aus dem Stand sind im Wesentlichen zwei Grundverfahren zur Rückbildung von QPSK oder QAM-Symbolen bekannt. Beim sogenannten Hard-Demapping werden die jeweiligen empfangenen QPSK oder QAM-Signale (Empfangsvektoren) durch eine eindeutige Entscheidung einem Konstellationspunkt (Symbolvektor) zugeordnet (Figur 16). Beim sogenannten Soft-Demapping erfolgt eine Rückbildung der empfangenen Signale in Daten, aus denen sich zusätzlich die zuverlässigkeit einer jeweiligen Entscheidung für ein bestimmtes QPSK oder QAM-Symbol ergibt (Figur 17). Beispiele für derartige Soft-Decision-Output-Demapper entnimmt man der US 6,661,282, der US 6,115,435, der US 6,226,333, der US 6,424,685 sowie dem Aufsatz von Tosato F-, Bisoglia P. "Simplified soft-output-demapper for binary interleaved COFDM witil application to HIPERLAN/2", Research Report, Department of Electronics, University of Padova 2001.

Eine derartige Soft-Decision-Dekodierung, welche die demodulierten Daten mit der Fehlezwahrscheinlichkeit der Daten gewichtet, führt zu einer besseren Vorwärtsfehlerkorrektur. Für Kommunikationssysteme, welche M-stufige QAM benutzen, benötigt der Empfänger daher einen Rückbildungsalgorithmus; welcher aus einem zweidimensionalen (komplexen) Empfangssignal die entsprechenden Soft-Entscheidungswerte als Eingangssignale für den Kanaldecoder berechnet. Voraussetzung für die Zuverlässigkeit eines derartigen Systems ist, dass für die Berechnung der entsprechenden Soft-Entscheidungswerte die richtigen Auftrittswahrscheinlichkeitsparameter für ein jeweiliges Symbol zu Grunde gelegt werden.

In der Regel arbeitet der Empfänger nach dem sogenannten Maximum-Likelihood-Prinzip, bei dem die Einzelwahrscheinlichkeiten jeweils multipliziert und die Empfangssecjuenz mit der höchsten Gesamtwahrscheinlichkeit ausgewählt wird. Zur Bestimmung der hierfür erforderlichen Einzelwahrscheinlichkeiten wird hauptsächlich die euklidische Distanz zwischen Empfangsvektor und nächstgelegenem idealen Symbolvektor verwendet. Außerdem wird dabei in der Regel vorausgesetzt, dass der Übertragungskanal eine Gaussförmige Amplitudenverteilung des Rauschens zeigt. Die logarithmische Maximum-Likelihood-Funktion für einen derartigen Übertragungskanal wird bei einem hohen Signal-Rausch-Abstand näherungsweise zu.

$$LLR - (CTF\ (i)^2\ /\ \sigma^2\ *\ (min\ [r(i) - \alpha_0] - min\ [r(i) - \alpha_1]^2)$$

angenommen, wobei

| | |
|---|---|
| i | ein Index für den Träger i |
| CTF | eine Rauschamplitude der Kanalübertragungsfunktion, |
| $\sigma^2$ | eine Rauschvarianz im Übertragungskanal, |
| r (i) | einen Empfangsvektor mit den Koordinaten I/Q, |
| $\alpha_0$ | die Menge der Konstellationspunkte, welche einer gesendeten "0" entsprechen (entsprechend den "idealen" Symbolvektoren für eine gesendete "0"), |
| $\alpha_1$ | die Menge der Konstellationspunkte, welche einer gesendeten "1" entsprechen (entsprechend den "idealen" Symbolvektoren für eine gesendete "1"), |

darstellen. In sogenannten COFDM (coded orthogonal frequency division multiplexing) -Systemen sollte die Soft-Information zur Vorwärtsfehlerkorrsktur (FEC = forward error correction) aus diesem Grund aus der Energie des jeweiligen Trägers, der detektierten Rauschenergie sowie der Wahrscheinlichkeit für den entsprechenden Konstellationspunkt berechnet werden.

Gemäß dem Stand der Technik wird zu diesem Zweck von einer festen Rauschenergie ausgegangen.

Häufig wird die Berechnung der Soft-Informationen mit Hilfe sogenannter Mapping- oder Lookup-Tables durchgeführt. Beispielhaft sei auf die US 6,115,435 verwiesen. Dadurch wird die Handhabung unterschiedlicher Konstellationen oder Hierarchie-Moden wie sie beispielsweise DVB-T (Digital Video Broadcasting - terrestrial) unterstützt, nämlich 16-QAM, 64-QAM, nicht hierarchische Konstellation, hierarchische Konstellation etc., schwierig.

Wird die Rückbildungscharakteristik dagegen explizit berechnet, ist die implementierung oft entweder zu komplex oder es treten signifikante Näherungsfehler auf. So ergibt sich beispielsweise aus der US 6,424,685 zwar eine vergleichsweise einfache Berechnung der Rückbildungscharakteristik aus Polarkoordinaten, jedoch hat sich herausgestellt, dass ein hoher Aufwand zu betreiben ist, um eine Anpassung an unterschiedliche Konstellationen oder Hierarchie-Moden zu erreichen.

Neuere Publikationen schlagen zur Vereinfachung des Rückbildungsvorgangs eine Transformation der empfangenen Konstellationsvektoren in eine einfachere Konstellationsanordnung vor. Man spricht hierbei von einem sogenannten Re-Mapping. So beschreibt die US 6,661,282 ein Re-Mapping durch Subtraktion eines Offsets. Diese Prozedur eignet sich jedoch nur für das 16-QAM-Verfahren. Die US 6, 226, 333 beschreibt die Rückbildung von QAM-Symbolen eines einzigen Quadranten mit Hilfe eines Rotators.

Die Aufgabe der vorliegenden Erfindung besteht nunmehr darin, ein Verfahren zur Rückbildung von QPSK- oder QAM-Symbolen sowie eine entsprechende Schaltungsanordnung vorzustellen, bei dem bzw. bei der unterschiedliche Konstellationen und Hierarchie-Moden implementierbar sind und welches bzw. welcher sich einfach realisieren lässt. Darüber hinaus soll das Rückbildungsverfahren bzw. die Rückbildungsschaltungsanordnung einen hohen Grad der Zuverlässigkeit der Vorhersage der rückgebildeten QPSK- bzw. QAM-Symbole aufweisen.

Diese Aufgabe wird durch ein Verfahren mit den Merkmalen des Patentanspruchs 1, 7, 8 oder 9 sowie durch eine Schaltungsanordnung mit den Merkmalen des Patentanspruchs 10, 11 oder 12 gelöst.

Vorteilhafte Ausführungen und Weiterbildungen der Erfindung sind in den Unteransprüchen angegeben.

Die Erfindung wird nunmehr anhand der Zeichnungen näher beschrieben. Es zeigen:

Figur 1     ein Blockschaltbild eines ersten Ausführungsbeispiels einer erfindungsgemäßen Schaltungsanordnung zur Rückbildung von QPSK- oder QAM-Symbolen (Soft-Demapper);

Figur 2     Partitionen der QPSK-Konstellation

a) MSB der In-Phase-Koordinate,
b) MSB der Quadratur-Koordinate;

Figur 3     Gewichtsfunktionen zur erfindungsgemäßen adaptiven Anpassung der "weichen" Entscheidungsinformation (soft decision) bei einer Schaltungsanordnung gemäß der Figur 1 im QPSK-Betrieb;

Figur 4     ein Blockschaltbild eines zweiten Ausführungsbeispiels einer erfindungsgemäßen Schaltungsanordnung zur Rückbildung von QPSK ODER QAM-Symbolen (Soft-Demapper);

Figur 5     Partitionen der nicht hierarchischen 16-QAM-Konstellation

a) MSB der In-Phase-Koordinate,
b) MSB der Quadratur-Koordinate;

Figur 6     eine erfindungsgemäße Umordnung der QAM-Symbole der 16-QAM-Konstellation (Re-mapping) im ersten Quadranten des Konstellationsdiagramms

a) Auszugszustand,
b) Zustand nach Verschiebung in Q-Richtung um a1,
c) Zustand nach verschiebung in I-Richtung um b1;

Figur 7     eine erfindungsgemäße Umordnung der QAM-Symbole der 16-QAM-Konstellation (Remapping) im 3. Quadranten des Konstellationsdiagramms

a) Auszugszustand,
b) Zustand nach verschiebung in Q-Richtung um a2,
c) Zustand nach Verschiebung in I-Richtung um b2,
d) Zustand nach Spiegelung an I-Achse,
e) Zustand nach Spiegelung an Q-Achse;

Figur 8     Log-Likelihood-Verhältnisse LLR des

a) MSB,
b) LSB

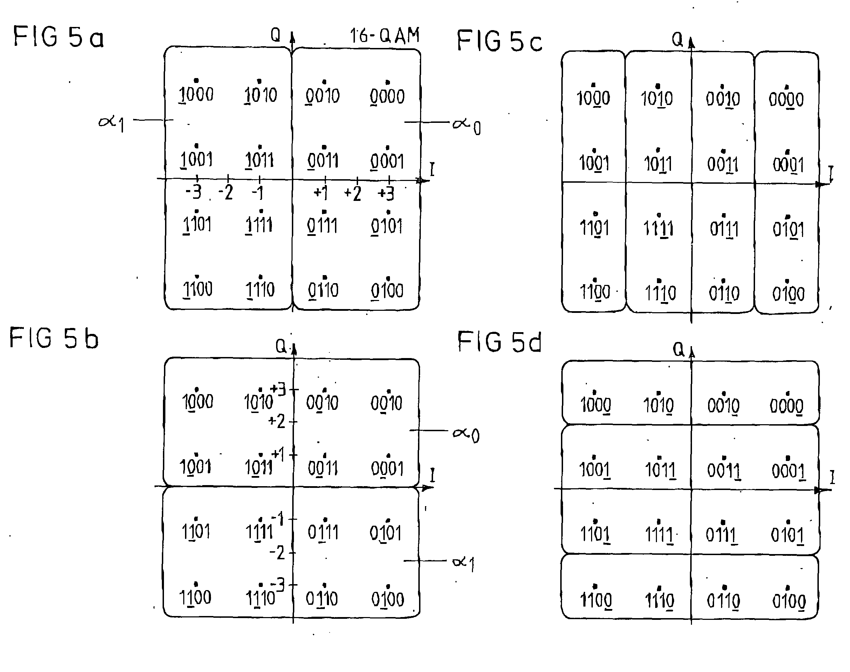

der 1-Koordinate der nichthierarchischen 16-QAM-Konstellation gemäß Figur 5 (gilt analog für das MSB/LSB der Q-Koordinate der 16-QAM-Konstellation);

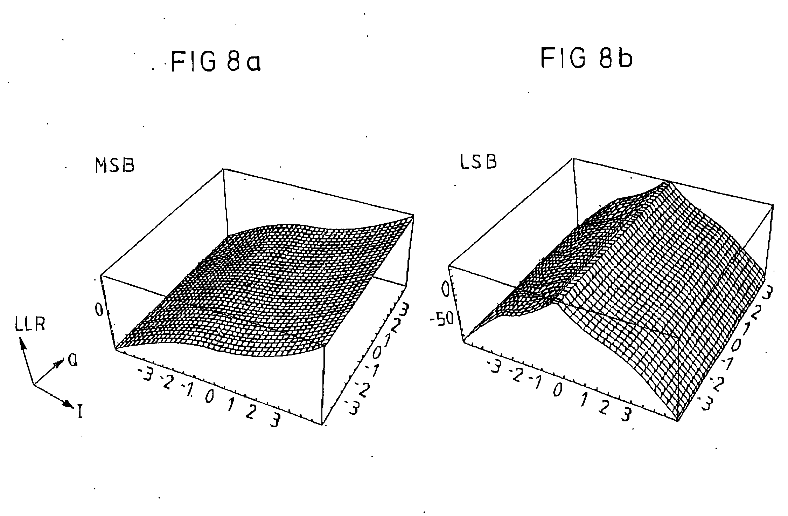

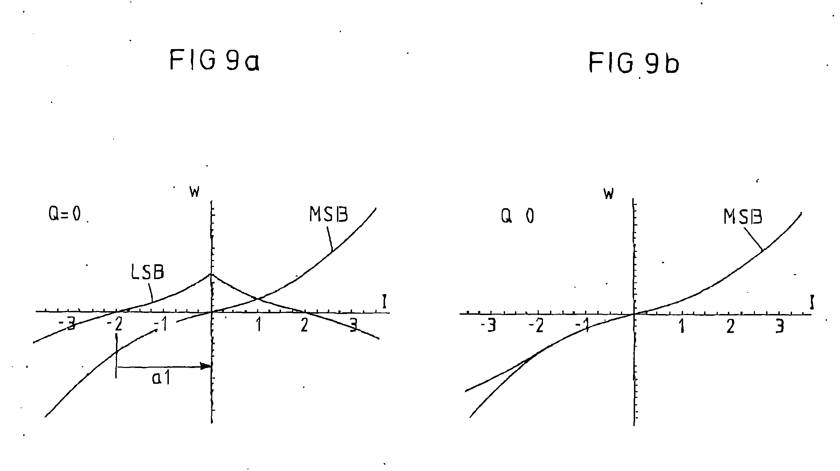

Figur 9     a) Schnitt der Funktionen gemäß den Figuren 8 a) und b) bei Q=0.
b) Verschiebung der Kurve für das LSB

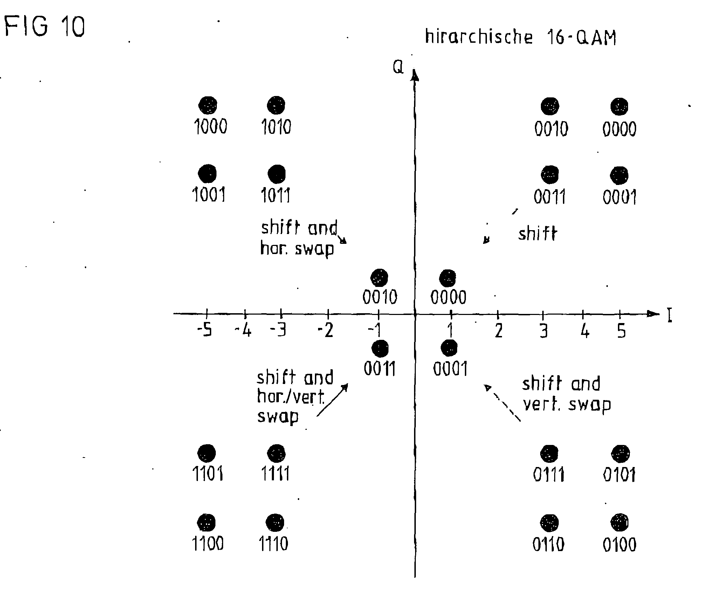

Figur 10    Koordinaten der QAM-Symbole einer hierarchischen 16-QAM-Konstellation und deren Remapping;

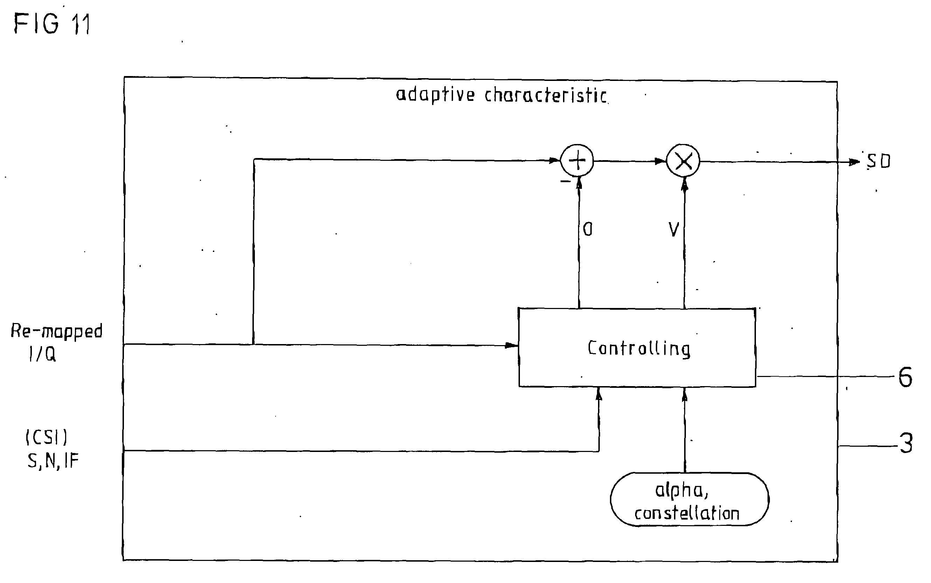

Figur 11    ein Blockschaltbild einer Recheneinheit zur adaptiven Berechnung einer Soft-Information;

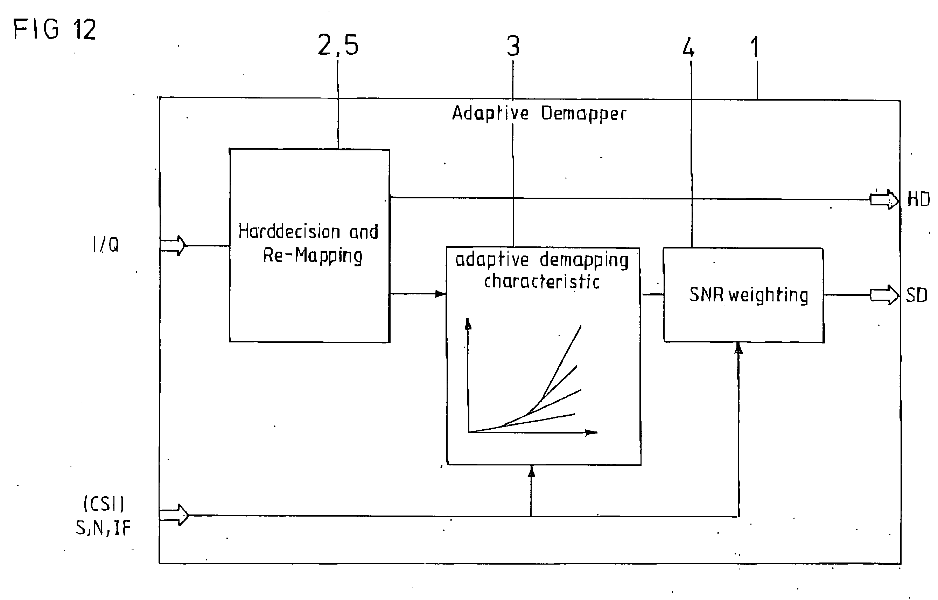

Figur 12    ein Blockschaltbild eines dritten Ausführungsbeispiels einer erfindungsgemäßen Schaltungsanordnung zur Rückbildung von QPSK oder QAM-Symbolen (Soft-Demapper);

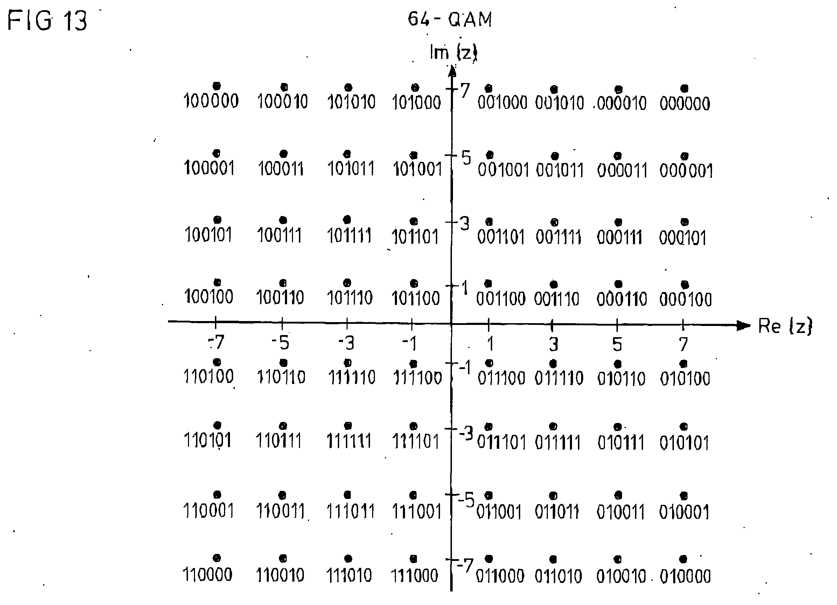

Figur 13    Symbol-Koordinaten einer nichthierarchischen 64-QAM-Konstellation;

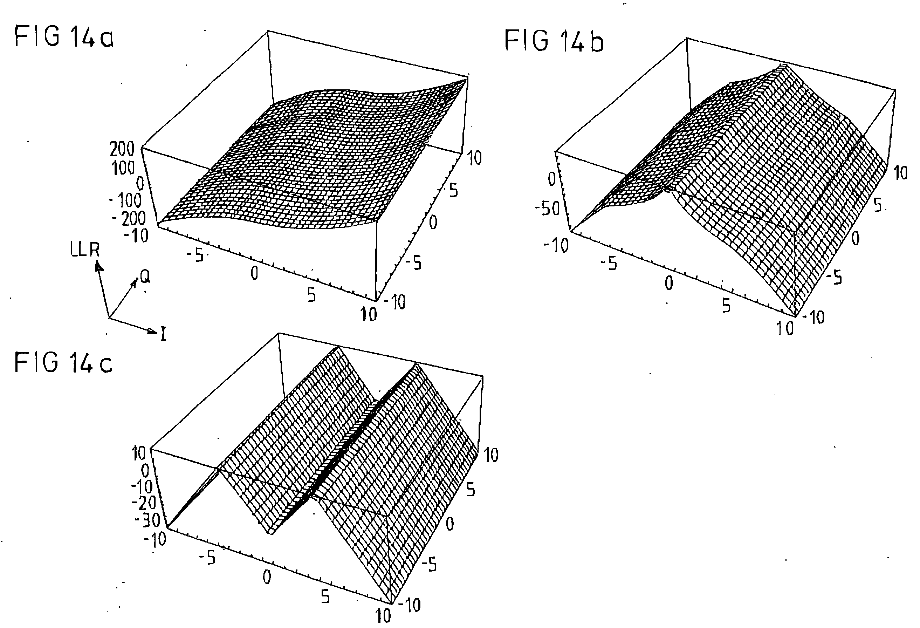

Figur 14    Log-Likelihood-verhältnisse LLR des

a) MSB,
b) $2^{nd}$SB,
c) LSB,

der 1-Koordinate der nichthierarchischen 64-QAM-Konstellation gemäß Figur 13;

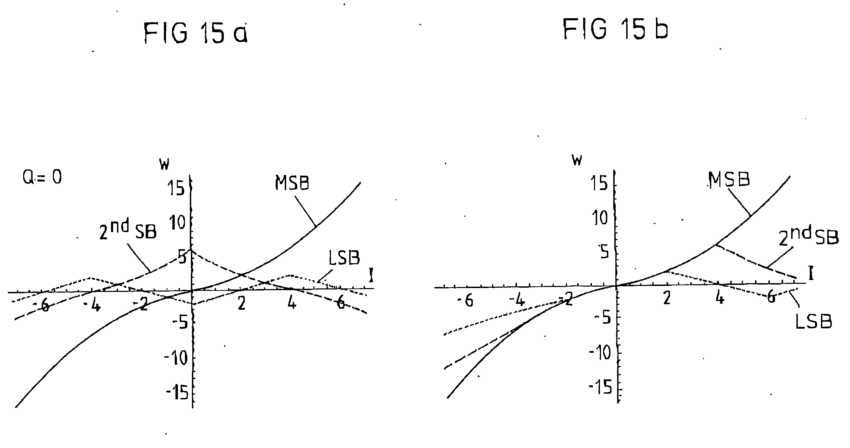

Figur 15    a) Schnitt der Funktionen gemäß den Figuren 14 a) und b) bei Q=0.
b) Verschiebung der Kurven der niederwertigen Bits

Figur 16    einen Hard-Output-Demapper gemäß dem Stand der Technik;

Figur 17    einen Soft-Output-Demapper gemäß dem Stand der Technik.

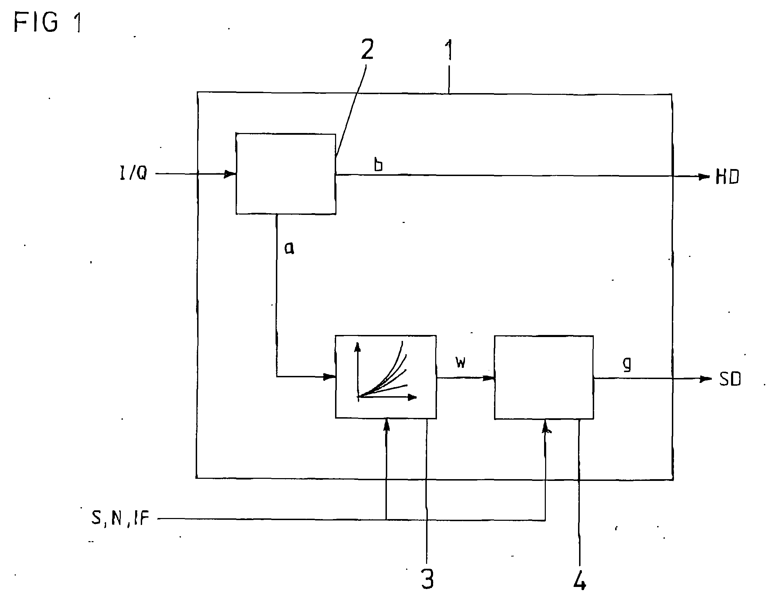

Die Figur 1 zeigt ein Blockschaltbild eines ersten Ausführungsbeispiels einer erfindungsgemäßen Schaltungsanordnung zur Rückbildung von QPSK oder QAM-Symbolen.

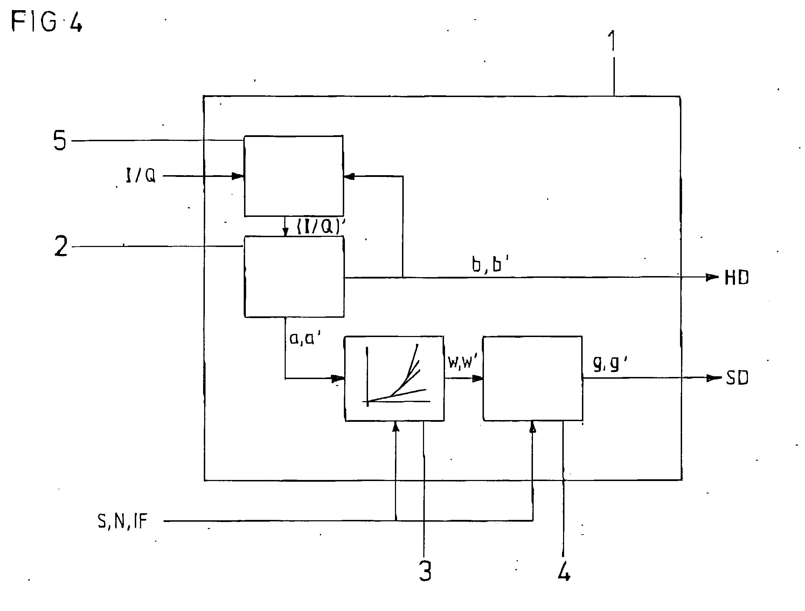

Diese Schaltungsanordnung eignet sich vorzugsweise zur Rückbildung von QPSK-Symbulen. Die Schaltungsanordnung kann jedoch auch verwendet werden, um M-stufige QAM-Symbole mit M = 16, 64 oder größer rückzubilden. Dies setzt jedoch eine parallele (und keine sequentielle Signalverarbeitung, wie sie bei den Ausführungsbeispielen nach den Figuren 4 ff verwendet wird) voraus.

Bei der Rückbildungsanordnung 1 gemäß der Figur 1 sind als wesentliche Schaltungseinheiten eine Schaltungsanordnung 2 zur Rückbildung von QPSK oder QAM-Symbolen durch eine "harte" Entscheidung (Hard-Decision-output-Deznapper), eine Schaltungsanordnung 3 zur Bestimmung der Empfangswahrscheinlichkeit w eines Bits sowie eine Schaltungsanordnung 4 zur zusätzlichen Gewichtung der Wahrscheinlichkeit w mit einem Faktor G.

Der Hard-Decision-Output-Demapper 2 weist einen Eingang auf, dem empfangene Signalvektoren r mit den Koordinaten I/Q zuführbar sind.

Weiterhin weist der Hard-Decision-Output-Demapper 2 einen Ausgang HD (Hard Decision) zum Abgreifen einer sogenannten "harten" Entscheidung b auf. Ein weiterer Ausgang des Hard-Decision-Output-Demappers 2 ist mit einem Eingang der Schaltungsanordnung 3 zur Bestimmung der Empfangswahrscheinlichkeit w eines Bits verbunden. Ein Ausgang dieser Schaltungsanordnung 3 ist wiederum mit einem Eingang der Schaltungsanordnung 4 zur Gewichtung der Empfangswahrscheinlichkeit w mit einem Faktor G verbunden. Diese Schaltungsanordnung 4 weist wiederum einen Ausgang SD (Soft Decision) auf, an dem eine "weiche" Entscheidungsinformation g abgreifbar ist.

Die Schaltungsanordnungen. 3, 4 weisen Steuereingänge auf, über die zeitvariante und im Falle von Mehrträgersystemen trägerabhängige Informationen zur Trägerenergie S, zur Rauschenergie N und/oder zur Störenergie IF zuführbar sind.

Das Demapping-Verfahren wird nachfolgend anhand einer QPSK-Konstellation beschrieben:

Ein dem Eingang des Hard-Decision-Output-Demappers 2 zugeführter Eingangsvektor r mit In-Phase-Koordinate I und Quadratur-Koordinate Q wird intern einem idealen Symbolvektor $\alpha$ und einer zugehörigen Bit-Sequenz b zugeordnet. Diese Bit-Sequenz b ist als Hard Decision am Ausgang HD des Hard-Decision-Output-Demappers 2 abgreifbar.

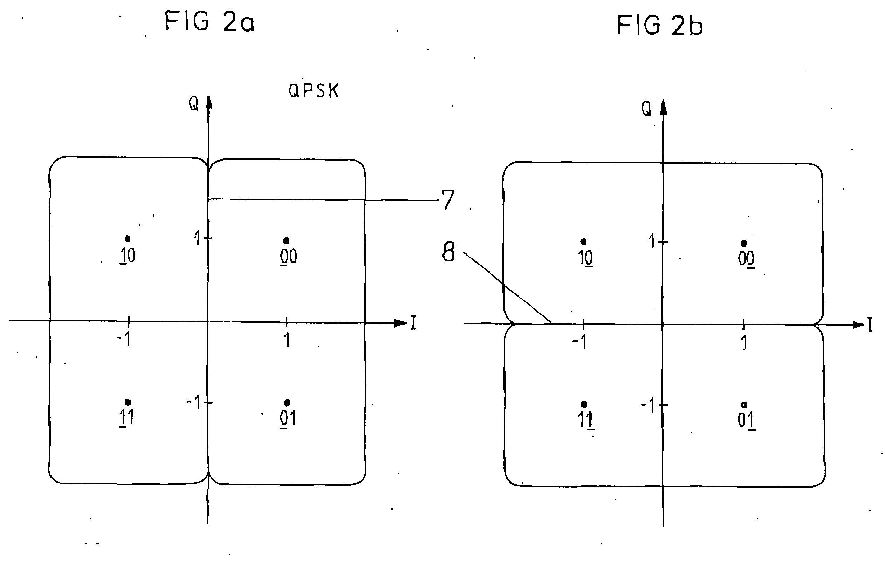

Innerhalb des Hard-Decision-Output-Demappers 2 wird weiterhin der euklidsche Abstand a des empfangenen Signalvektors r zur für die harte Entscheidung b verwendeten Entscheidungsschwelle 7, 8 bestimmt (vgl. Fig. 2). Dieser Wert a wird weiter einer Soft-Entscheidungs-Prozedur unterworfen. In der Schaltungsanordnung 3 wird a in Abhängigkeit von einer Trägerenergie S (welche z.B. aus einer Kanalübertragungsfunktion CTF abgeleitet werden kann), von einer lokalen Rauschenergie N und/oder einer Störenergie IF vorgebbaren Demapping Charakteristik W unterworfen. Als Ergebnis dieser Operation erhält man einen Empfangswahrscheinlichkeitswert w für das entsprechende Bit.

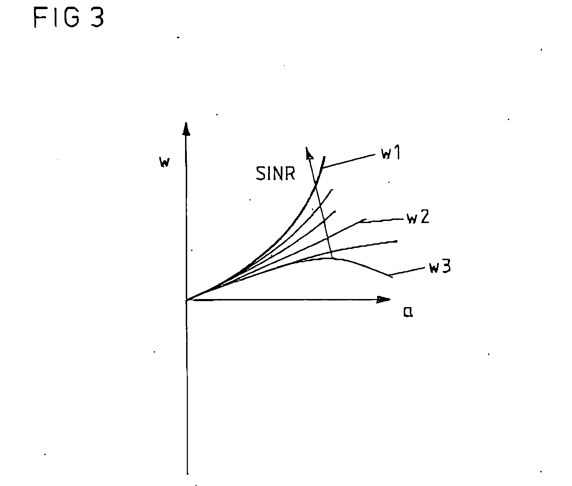

Fig. 3 zeigt beispielhaft eine Kurvenschar der Demapping Charakteristik W bei unterschiedlichen Empfangsbedingungen. Während bei hoher Empfangsqualität (hohes SINR) die Wahrscheinlichkeit w für eine korrekte Entscheidung mit zunehmendem Abstand a überproportional ansteigt (w1), ergibt sich bei geringem Signal zu Interferenz- und Rausch-Verhältnis SINR ein eher linearer Zusammenhang zwischen a und w (w2) bzw. bei Störeinflüssen (Interferenzen) sogar eine abnehmende Wahrscheinlichkeit w für große Abstände a (w3).

Vorteilhafterweise wird das hierbei erzeugte Ausgangssignal w wie im vorliegenden Ausführungsbeispiel zusätzlich mit einem der Trägerenergie S und/oder der Rauschenergie N und/oder der Störenergie IF abhängigen Größe G gewichtet. Als Ausgangsgröße erhält man

$$g = G * W (a)$$

Als Gewichtungsfaktor G kann vorzugsweise das Verhältnis SINR aus momentaner Signalenergie S zur Summe der momentanen Rausch- und Störenergien N, IF des zugehörigen Kanals verwendet werden.

Figur 4 zeigt ein Blockschaltbild eines zweiten Ausführungsbeispiels einer erfindungsgemäßen Rückbildungsanordnung zur Rückbildung von QAM-Symbolen. Die Rückbildungsanordnung 1 gemäß der Figur 4 umfasst eine Schaltungsanordnung 2 zur Rückbildung von QAM-Symbolen durch eine "harte" Entscheidung (Hard-Decision-Output-Demapper), eine Schaltungsanordnung 3 zur Bestimmung der Empfangswahrscheinlichkeit w eines Bits sowie eine Schaltungsanordnung 4 zur zusätzlichen Gewichtung der Wahrscheinlichkeit w mit einem Faktor G sowie eine Schaltungsanordnung 5 zur Umordnung von QAM-Symbolen (Remapper).

Die einzelnen Schaltungsanordnungen sind ähnlich wie die im ersten Ausführungsbeispiel gemäß der Figur 1 miteinander verbunden. Die nunmehr zusätzlich vorgesehene Schaltungsanordnung 5 zur Umordnung von QAM-Symbolen (Remapper) ist dem Hard-Decision-Output-Demapper 2 vorgeschaltet.

Die Rückbildung eines Signalvektors wird nachfolgend am Beispiel einer 16-QAM-Konstellation beschrieben:

Ein dem Remapper 5 zugeführter Eingangsvektor r mit In-Phase-Koordinate I und Quadratur-Koordinate Q wird schrittweise in Teilkonstellationen zerlegt.

In einem ersten. Schritt wird zunächst der Eingangsvektor r unmittelbar an den Hard-Decision-Output-Demapper 2 weitergegeben.

Der Hard-Decision-Output-Demapper 2 trifft eine harte Entscheidung durch die Zuordnung des Empfangsvektors r zu den beiden höchstwertigen Bits $b_h$ des nächstgelegenen idealen Symbolvektors $\alpha$. Die Soft-Information wird analog zu der zur QPSK beschriebenen Vorgehensweise bestimmt.

Nach der ersten harten Entscheidung verbleibt nur noch eine Teilmenge möglicher idealer Symbolvektoren $\alpha$. In der Schaltungsanordnung 5 wird diese verbleibende Teilkonstellation ausgewählt. Diese Teilkonstellation wird durch geeignete Transformation in eine zum Ursprung symmetrische Konstellation überführt. Bei dieser Transformation handelt es sich stets um eine Verschiebung und ggf. um eine hieran anschließende Spiegelung.

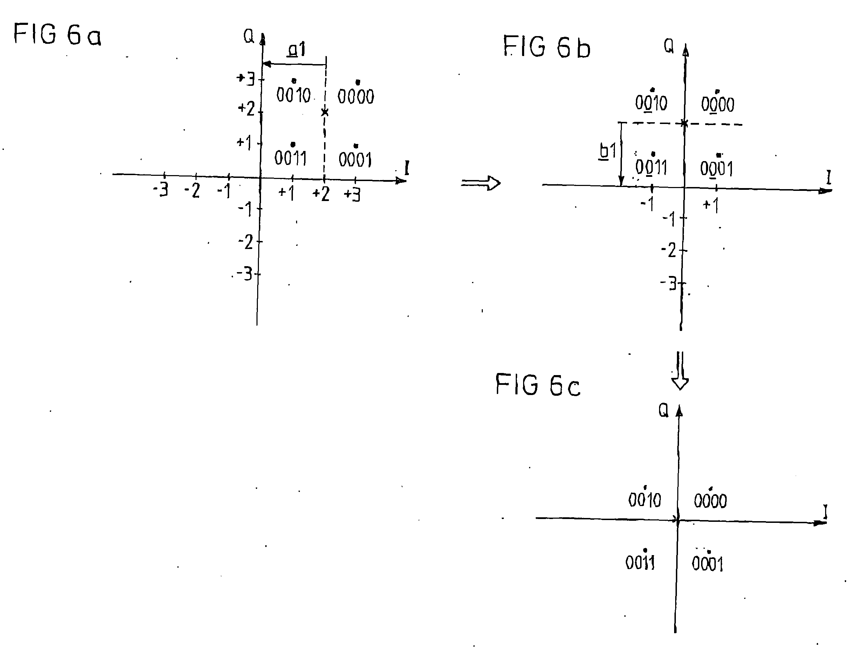

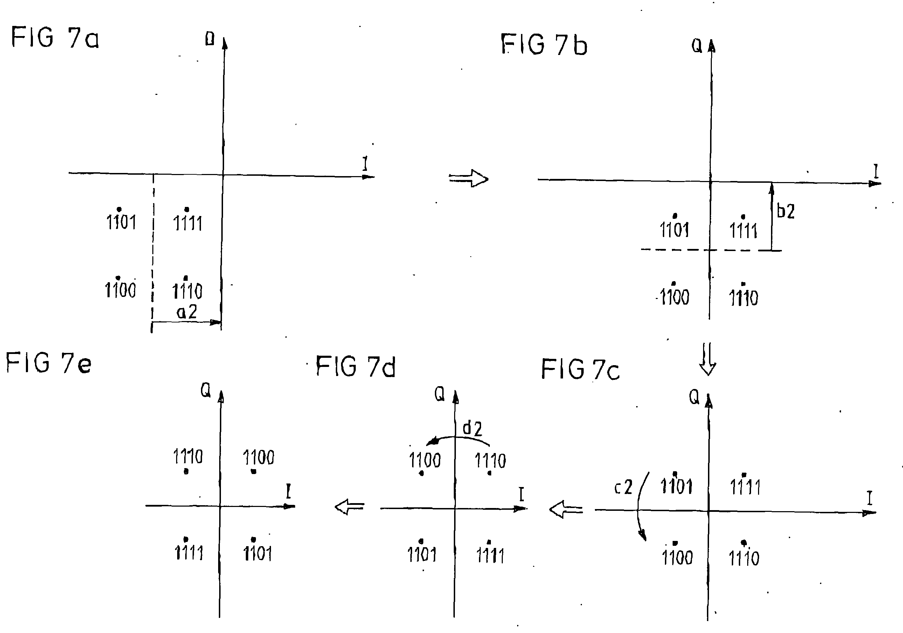

Geht man von einer nichthierarchischen 16-QAM-Konstellation aus, wie sie beispielsweise der Figur 5 zu entnehmen ist, so können sich z.B. die in den Figuren 6 und 7 dargestellten Transformationen ergeben.

Nimmt man an, dass wie in Figur 6 als Teilkonstellation die Symbolvektoren $\alpha$ im ersten Quadranten ausgewählt wurden, so umfasst die Transformation eine Verschiebung um den Verschiebevektor a1 sowie um den Verschiebevektor b1.

Nimmt man an, dass wie in Figur 7 als Teilkonstellation die Symbolvektoren $\alpha$ im dritten Quadranten ausgewählt wurden, so umfasst die Transformation eine Verschiebung um den verschiebevektor a2, eine Verschiebung um den Verschiebevektor b2 sowie zwei Spiege7.ungen c2 und d2.

Geht man von einer hierarchischen 16-QAM-Konstellation aus, so kann sich beispielsweise die in Figur 10 dargestellte Transformation ergeben. Im Vergleich zum nichthierarchischen Fall ändert sich nur der Verschiebungsvektor.

Für die Entscheidung der niederwertigeren Bits wird der in diese Konstellation transformierte Empfangsvektor r' mit In-Phase-Koordinate I' und Quadratur-Koordinate Q' dem Eingang des Hard-Decision-Output-Demapers 2 zugeführt.

Der transformierte Empfangsvektor r' wird intern einem transformierten idealen Symbolvektor $\alpha$' und einer zugehörigen Bit-Sequenz b' zugeordnet- Diese Bit-Sequenz b' ist als Hard Decision am Ausgang HD des Hard-Decision-Output-Demappers 2 abgreifbar.

Innerhalb des Hard-Decision-Output-Demappers 2 wird weiterhin der euklidsche Abstand a' des nun transformierten empfangenen Signalvektors r' zur für die harte Entscheidung b' verwendeten Entscheidungsschwelle 7, 8 -wie in der Fig. 2 dargestellt istbestimmt.

Dieser Wert a' wird erneut einer Soft-Entscheidungs-Prozedur unterworfen. In der Schaltungsanordnung 3 wird a' in Abhängigkeit von einer Trägerenergie S, von einer lokalen Rauschenergie N und/oder einer Störenergie 1F vorgebbaren Demapping Charakteristik W unterworfen. Als Ergebnis dieser Operation erhält man einen Empfangswahrscheinlichkeitswert w' für das entsprechende Bit.

Das log-Likelihood-Verhältnis LLR, das allgemein zur Destimmung der Empfangswahrscheinlichkeit eines Bits verwendet wird, ist ideal betrachtet abhängig von der In-Phase-Koordinate I und der Quadratur-Koordinate Q und somit eine sweidimensionale Funktion. Figur 8 a) zeigt die log-Likelihood-Verhältnisse LLR des höchstwertigen Bits (MSB = Most Significant Bits), Figur 8 b) zeigt die log-Likelihood-Verhältnisse LLR des niederwertigsten Bits (LSB) einer nichthierarchischen 16-QAM-Konstellation. wie aus Figur 8 ersichtlich ist, ist der Einfluß der Quadratur-Komponente Q für die Entscheidung bezüglich der In-Phasen-Komponente I nur sehr gering und.daher vernachlässigbar. Näherungsweise kann das log-Likelihood-Verhältnis LLR für die In-Phasen-Komponente I mit dem log-Likelihood-verhältnis bei Q=0 angenommen werden (Figur 9 a)).

Die LLR-Charakteristik für Bits b unterschiedlicher Wertigkeit ist allerdings stark verschieden. Es zeigt sich jedoch, dass sich durch geeignete Verschiebung der Einzelcharakteristiken für Bits unterschiedlicher Wertigkeit eine einheitliche Gesamtcharakteristik ergibt, die im maßgeblichen Aussteuerbereich eine ausreichende Näherung darstellt (Figur 9 b)).

Durch das vorstehend beschriebene Remapping-Verfahren erfolgt eine solche geeignete Verschiebung. Somit kann als Demapping-Charakteristik Weine für alle Bits einheitliche Funktion verwendet werden, nämlich das log-Likelihood-Verhältnis LLR des höchstwertigen Bits MSB.

Die Charakteristik W kann beispielsweise durch Kombination linearer segmente realisiert werden. Figur 11 zeigt ein Schaltbild für die Berechnung der Charakteristik W mit Hilfe einer offset-Korrektur O und einer anschließenden Verstärkung V. Der Offset-Korrekturparameter O und der Verstärkungsparameter V sind vorzugsweise in Form einer Tabelle in der für den Demapping Vorgang vorgesehenen Schaltungsanordnung 3 hinterlegt und werden abhängig von der verwendeten Konstellation, dem verwendeten Hierarchiemodus und der Adaptionsparameter Signalenergie S, Rauschenergie N und Störenergie IF von einer Recheneinrichtung 6 ausgewählt.

Das von der Schaltungsanordnung 3 erzeugte Ausgangssignal w' wird im vorliegenden Ausführungsbeispiel zusätzlich mit einer von der Trägerenergie S und/oder der Rauschenergie N und/oder der Störenergie IF abhängigen Größe G gewichtet. Als Ausgangsgröße erhält man

$$g' = G * W(a')$$

Als Gewichtungsfaktor G kann wiederum das verhältnis SINR aus momentaner Signalenergie S zur Summe der momentanen Rausch- und Störenergien N, IF des zugehörigen Kanals verwendet werden.

Figur 12 zeigt ein Blockschaltbild eines weiteren Ausführungsbeispiels einer erfindungsgemäßen Schaltungsanordnung 1 zur Rückbildung von QPSK oder QAM-Symbolen (Soft-Demapper).

Bei diesem Ausführungsbeispiel sind Hard-Decision-Output-Demapper 2 und Remapper 5 kombiniert. Im Übrigen entspricht diese Schaltungsanordnung 1 denen gemäß den Figuren 1 und 4.

Der kombinierte De-/Remapper 2, 5 kann zum einen ähnlich aufgebaut sein, wie im Ausführungsbeispiel gemäß der Figur 4, nämlich indem der Remapper 5 dem Hard-Decision-output-Demapper 2 vorgeschaltet ist. Diese Anordnung eignet sich auch zur Rückbildung höherstufiger Konstellationen, wie z.B. 64-QAM. Hierzu sind lediglich weitere Iterationszyklen des oben beschriebenen Demapping- und Remapping-Vorgangs, erforderlich-Die den Diagrammen zur nichthierarchischen 16-QAM-Konstellation entsprechend den Figuren 5 bis 9 korrespondierenden Diagramme zur nichthierarchischen 64-QAM-Konstellation sind der Vollständigkeit halber in den Figuren 13 bis 15 dargestellt.

Es ist weiter möglich, dass der Remapper 5 dem Demapper 2 nachgeschaltet ist oder dass Remapper 5 und Demapper 2 in einer einzigen Schaltungsanordnung vereint sind.

Weiterhin ist es möglich, dass die Schaltungsanordnung 3 zur Bestimmung der Empfangswahrscheinlichkeit w eines Bits und die Schaltungsanordnung 4 zur Gewichtung der Empfangswahrscheinlichkeit w in einer einzigen Schaltung realisiert sind.

Als Steuergrößen S, N, IF für die Adaption der Schaltungsanordnungen 3 und/oder 4 kommen folgende Möglichkeiten in Betracht :

Fall 1:    die Rauschenergie N wird als konstant angenommen, lediglich die Signalenergie S wird aus der Kanalübertragungsfunktion CTF bestimmt: S - abs(CTF)$^2$, Interferenzen IF werden vernachlässigt

Fall 2:    die Rauschenergie N ist vom Träger i abhängig, die Signalenergie S wird aus der Kanalübertragungsfunktion CTF bestimmt: S - abs(CTF)$^2$, Interferenzen IF werden vernachlässigt

Fall 3:    die Rauschenergie N ist konstant, die Signalenergie S wird aus der Kanalübertragungsfunktion CTF bestimmt: S - abs (CTF)$^2$, Interferenzen IF werden für jeden Träger bestimmt oder ggf. geschätzt

Fall 4:    die Rauschenergie N ist vom Träger i abhängig, die Signalenergie S wird aus der Kanalübertragungsfunktion CTF bestimmt: S - abs (CTF)$^2$, Interferenzen IF werden für den jeweiligen Träger bestimmt bzw. geschätzt

Bezugszeichenliste

| | |
|---|---|
| I | In-Phase-Koordinate |
| Q | Quadratur-Koordinate |
| S | Signalenergie |
| N | Rauschenergie |
| IF | Störenergie |
| QAM | Quadratur-Amplituden-Modulation |
| QPSK | Quaternäres Phase Shift Keying |
| SINR | Signal zu Interferenz- und Rausch-Verhältnis |
| MSB | Most Significant Bit |
| LSB | Lowest Significant Bit |
| $2^{nd}$SB | Second Significant Bit |
| CTF | Channel transfer function |
| LLR | Log-Likelihood-Ratio |
| FEC | forward error correction = Vorwärtsfehlerkorrektur |
| M | Zahl der zustände |
| $\sigma$ | Rauschvarianz |
| COFDM | coded orthogonal frequency division multiplexing |
| HD | Ausgang für "hard decision" |
| SD | Ausgang für "soft decision" |
| $\alpha$ | idealer Symbolvektor |
| $\alpha_0$ | Menge der Symbolvektoren für eine gesendete logische "0" |
| $\alpha_1$ | Menge der Symbolvektoren für eine gesendete logische "1" |
| r | Empfangsvektor |
| g | gewichtete Empfangswahrscheinlichkeit |
| w | Empfangswahrscheinlichkeit |
| b | Bit |
| $b_h$ | höherwertiges Bit |
| $b_1$ | niederwertiges Bit |
| i | Trägerindex |
| CSI | Channel State Information |
| IF | Störenergie |
| G | Gewichtungsfaktor |
| W | Demapping-Charakteristik |
| V | Verstärkung |
| O | Offset |
| a1 | verschiebeweg |
| b1 | Verschiebeweg |
| a2 | Verschiebeweg |
| b2 | Verschiebeweg |
| c2 | Spiegelung |
| d2 | Spiegelung |
| 1 | Schaltungsanordnung zur Rückbildung einer Bitsequenz aus QPSK oder QAM-Symbolen (Demapper) |

2      Schaltungsanordnung zur Rückbildung einer Bitsequenz aus QPSK oder QAM-Symbolen durch eine "harte" Entscheidung (Hard-Decision-Output-Demapper)

3      Schaltungsanordnung zur Bestimmung der Empfangswahrscheinlichkeit eines Bits

4      Schaltungsanordnung zur Gewichtung der Empfangswahrscheinlichkeit eines Bits

5      Schaltungsanordnung zur Umordnung von QPSK oder QAM-Symbolen (Remapper)

6      Recheneinrichtung

7      Entscheidungsschwelle

8      Entscheidungsschwelle

100      Soft-Decision-Output-Demapper

200      Hard-Decision-Output-Demapper

**Patentansprüche**

1. Verfahren zur Rückbildung einer Bitsequenz (b, b') aus QPSK- oder QAM-Symbolen, bei dem jedem Empfangsbit (b, b') eine zugehörige Empfangswahrscheinlichkeit (w, w') zugeordnet wird, **dadurch gekennzeichnet, dass** die Empfangswahrscheinlichkeit (w, w') unter Berücksichtigung der Übertragungseigenschaften des Kanals adaptiv bestimmt wird.

2. Verfahren nach Anspruch 1, **dadurch gekennzeichnet, dass** die Empfangswahrscheinlichkeit (w, w') in Abhängigkeit von der Trägerenergie (S), der Rauschenergie (N) und/oder der Störenergie (IF) bestimmt wird.

3. verfahren nach einem der Ansprüche 1 oder 2, **dadurch gekennzeichnet, dass** bei der Bestimmung der Empfangswahrscheinlichkeit (w, w') für jeden Träger (i) eine separate Abschätzung der Übertragungseigenschaften erfolgt.

4. Verfahren nach einem der Ansprüche 1, 2 oder 3, **dadurch gekennzeichnet, dass** zur Bestimmung der Empfangswahrscheinlichkeit niederwertiger Bits höherstufige und/oder hierarchische Konstellationen in Konstellationen niedrigerer Stufe transformiert werden und dass für alle Bitwertigkeiten eine einheitliche Funktion zur Bestimmung der Empfangswahrscheinlichkeit verwendet wird.

5. Verfahren nach einem der Ansprüche 1 bis 4, **dadurch gekennzeichnet, dass** die Rückbildung von Bits (b, b') unterschiedlicher Wertigkeit sequentiell erfolgt.

6. Verfahren nach einem der Ansprüche 1 bis 5, **dadurch gekennzeichnet, dass** die Empfangswahrscheinlichkeit (w, w') unter Berücksichtigung der Übertragungseigenschaften des Kanals adaptiv gewichtet (g, g') wird.

7. Verfahren zur Rückbildung einer Bitsequenz (b, b') aus QPSK- oder QAM-Symbolen, bei dem jedem Empfangsbit (b, b') eine zugehörige Empfangswahrscheinlichkeit (w, w') zugeordnet wird, **dadurch gekennzeichnet, dass** die Rückbildung von Bits (b, b') unterschiedlicher wertigkeit sequentiell erfolgt.

8. Verfahren zur Rückbildung einer Bitsequenz (b, b') aus QPSK- oder QAM-Symbolen, bei dem jedem Empfangsbit (b, b') eine zugehörige Empfangswahrscheinlichkeit (w, w') zugeordnet wird, **dadurch gekennzeichnet, dass** zur Bestimmung der Empfangswahrscheinlichkeit niederwertiger Bits höherstufige und/oder hierarchische Konstellationen in Konstellationen niedrigerer Stufe transformiert werden und dass für alle Bitwertigkeiten eine einheitliche Funktion zur Bestimmung der Empfangswahrscheinlichkeit verwendet wird.

9. Verfahren zur Rückbildung einer Bitsequenz (b, b') aus QPSK- oder QAM-Symbolen, bei dem jedem Empfangsbit (b, b') eine zugehörige Empfangswahrscheinlichkeit (w, w') zugeordnet wird, **dadurch gekennzeichnet, dass** die Empfangswahrscheinlichkeit (w, w') zusätzlich unter Berücksichtigung der Übertragungseigenschaften des Kanals adaptiv gewichtet (g, g') wird.

10. Schaltungsanordnung (1) zur Rückbildung einer Bitsequenz (b, b') aus QPSK- oder QAM-Symbolen, bei dem jedem Empfangsbit (b, b') eine zugehörige Empfangswahrscheinlichkeit (w, w') zugeordnet wird, **dadurch gekennzeichnet, dass** eine Schaltungsanordnung (3) vorgesehen ist, welche die Empfangswahrscheinlichkeit (w, w') unter Berücksichtigung der Übertragungseigenschaften des Kanals adaptiv bestimmt.

11. Schaltungsanordnung (1) zur Rückbildung einer Bitsequenz (b, b') aus QPSK- oder QAM-Symbolen, bei dem jedem Empfangsbit (b, b') eine zugehörige Empfangswahrscheinlichkeit (w, w') zugeordnet wird, **dadurch gekennzeichnet, dass** eine Schaltungsanordnung zur Umordnung von QAM-Symbolen vorgesehen ist, welche zur Bestimmung der Empfangswahrscheinlichkeit niederwertiger Bits höherstufige und/oder hierarchische Konstellationen in Konstellationen niedrigerer Stufe transformiert und dass eine Schaltungsanordnung (3) vorgesehen ist, die für alle Bitwertigkeiten eine einheitliche Funktion zur Bestimmung der Empfangswahrscheinlichkeit verwendet.

**12.** Schaltungsanordnung (1) zur Rückbildung einer Bitsequenz (b, b') aus QPSK- oder QAM-symbolen, bei dem jedem Empfangsbit (b, b') eine zugehörige Empfangswahrscheinlichkeit (w, w') zugeordnet wird,

**dadurch gekennzeichnet, dass** eine schaltungsanordnung vorgesehen ist, welche die Empfangswahrscheinlichkeit (w, w') unter Berücksichtigung der Übertragungseigenschaften des Kanals zusätzlich adaptiv gewichtet (g, g').

FIG 1

FIG 2a

QPSK

FIG 2b

FIG 3

FIG. 4

EP 1 601 148 A2

FIG 5 a

16-QAM

$\alpha_1$

$\alpha_0$

| 1000 | 1010 | 0010 | 0000 |
| 1001 | 1011 | 0011 | 0001 |
| 1101 | 1111 | 0111 | 0101 |
| 1100 | 1110 | 0110 | 0100 |

-3  -2  -1  +1  +2  +3

FIG 5 c

| 1000 | 1010 | 0010 | 0000 |
| 1001 | 1011 | 0011 | 0001 |
| 1101 | 1111 | 0111 | 0101 |
| 1100 | 1110 | 0110 | 0100 |

FIG 5 b

$\alpha_0$

$\alpha_1$

| 1000 | 1010 | 0010 | 0010 |
| 1001 | 1011 | 0011 | 0001 |
| 1101 | 1111 | 0111 | 0101 |
| 1100 | 1110 | 0110 | 0100 |

+3  +2  +1  -1  -2  -3

FIG 5 d

| 1000 | 1010 | 0010 | 0000 |
| 1001 | 1011 | 0011 | 0001 |
| 1101 | 1111 | 0111 | 0101 |
| 1100 | 1110 | 0110 | 0100 |

FIG 6a

FIG 6b

FIG 6c

FIG 7a

Q

I

1101   1111

1100   1110

a2

⇒

FIG 7b

Q

I

1101   1111

b2

1100   1110

⇓

FIG 7e

Q

I

1110   1100

1111   1101

⇐

FIG 7d

Q

d2

1100   1110

I

1101   1111

⇐

FIG 7c

Q

c2   1101   1111

I

1100   1110

EP 1 601 148 A2

FIG 8b

LSB

FIG 8a

MSB

LLR

Q

I

EP 1 601 148 A2

# FIG 9a

# FIG 9b

FIG 10

hirarchische 16-QAM

Q

1000   1010

0010   0000

1001   1011

0011   0001

shift and
hor. swap

shift

0010   0000

-5  -4  -3  -2  -1      1   2   3   4   5   I

0011   0001

shift and
hor./vert.
swap

shift and
vert. swap

1101   1111

0111   0101

1100   1110

0110   0100

EP 1 601 148 A2

FIG 11

adaptive characteristic

SD

a

V

Re-mapped
I/Q

Controlling

6

(CSI)
S,N,IF

3

alpha,
constellation

EP 1 601 148 A2

FIG 12

EP 1 601 148 A2

FIG 13

64 - QAM

Im (z)

100000 100010 101010 101000 | 7 001000 001010 .000010 000000

100001 100011 101011 101001 | 5 001001 001011 000011 000001

100101 100111 101111 101101 | 3 001101 001111 000111 000101

100100 100110 101110 101100 | 1 001100 001110 000110 000100

─────────────────────────────────────────────────► Re (z)

-7    -5    -3    -1       1    3    5    7

110100 110110 111110 111100 | -1 011100 011110 010110 010100

110101 110111 111111 111101 | -3 011101 011111 010111 010101

110001 110011 111011 111001 | -5 011001 011011 010011 010001

110000 110010 111010 111000 | -7 011000 011010 010010 .010000

EP 1 601 148 A2

FIG 14 a

FIG 14 b

FIG 14 c

EP 1 601 148 A2

FIG 15 a

FIG 15 b

FIG 16 (Stand der Technik)

FIG 17 (Stand der Technik)